Europäisches Patentamt

**European Patent Office**

**Office européen des brevets**

(11) Publication number: **0 410 291 A2**

# EUROPEAN PATENT APPLICATION

(21) Application number: 90113782.8

(22) Date of filing: **18.07.90**

(51) Int. Cl.⁵: **B32B 5/18**, B32B 35/00, A41D 31/02

(30) Priority: **24.07.89 US 384573**

(43) Date of publication of application:
**30.01.91 Bulletin 91/05**

(84) Designated Contracting States:
**DE FR GB IT SE**

(71) Applicant: **W.L. GORE & ASSOCIATESTES**
**551 Paper Mill Road P.O. Box 9206**
**Newark, DE 19714(US)**

(72) Inventor: **Sakhpara, Dilip**
**159 Boyer Drive**
**Newark, Delaware 19702(US)**

(74) Representative: **Klunker . Schmitt-Nilson .**
**Hirsch**
**Winzererstrasse 106**
**D-8000 München 40(DE)**

(54) Insert for articles of clothing.

(57) The invention herein is directed to providing a strong uniformly welded seam in new inserts for articles of clothing, that are easily slidable over the inner protective lining of the clothing.

Figure 1

## FIELD OF THE INVENTION

The present invention relates to a watertight insert for lining articles of clothing, in particular gloves, shoes and caps, and to methods for producing it.

## BACKGROUND OF THE INVENTION

Watertight but water vapor-permeable membrane material exists which has been used increasingly in recent years for the production of watertight articles of clothing. Due to its vapor permeability it results in pleasant wearing properties. Such membrane material is made, for example, of expanded microporous polytetrafluoroethylene (usually abbreviated to PTFE).

More recently, such membrane material has also been used for producing watertight articles of clothing such as shoes, gloves and caps. Such articles of clothing are lined on the inside at least partly with a functional layer consisting of such membrane material.

These inserts have a seam that follows the contour of the desired article. These seams are a problem because they are potential sites of water penetration. For this reason a watertight insert for clothing is conventionally produced by rolling two membrane films off separate supply rolls and directing them superimposed into a welding unit where they are welded together by means of a welding form along a contour path corresponding approximately to the contour of the article of clothing. Since this kind of insert is initially a two-dimensional structure, It is oversized so that the part of the body to be clothed, for example the hand in the case of a glove, fits into the insert comfortably enough.

It has turned out that the welding seams of such inserts are mechanical weak points which can tear if the inserts are handled inexpertly during production of the corresponding clothing.

Glove production shall be taken as an example. The insert having an outer contour corresponding to the finished glove is usually placed over a rough wooden model of a hand or a wooden model with liner material already on it. Some of these inner lining materials include insulations that exhibit friction between the two surfaces. It often happens that these two actions are performed too vigorously so that the insert tears at the welding seam. In particular when tearing occurs during the placing of the outer covering of the glove, it goes unnoticed. But also when the insert is accidentally placed over the wooden model of the hand in such a way that two fingers of the wooden model go into one and the same finger of the insert, this may over strain the watertight insert and cause a tear at its welding seam.

## SUMMARY OF THE INVENTION

The invention herein is directed to inserts of articles of clothing and to providing a strong uniformly welded seam in the inserts and to providing inserts that easily slide over an inner protective lining of the glove.

The process aspect of the invention comprises:
1) laminating a sheet of porous polymeric membrane that is breathable but waterproof to a sheet of textile material by using a continous coating of a breathable thermoplastic adhesive polymer,
2) placing two of said laminates together to form a layered structure with the sheets of textile material adjacent one another in abutting relationship,
3) bonding said laminates together along a contour path by causing the breathable thermoplastic adhesive polymer to flow together through the textile material layers of each laminate.

The product aspect of the invention comprises a waterproof insert for lining the interior of contoured articles of clothing, which comprises:
two superimposed layers, each of which is a laminate composed of a sheet of porous polymeric membrane that is breathable but waterproof continuously laminated by an adhesive of breathable thermoplastic (remeltable) polymer to a sheet of a textile material,
said laminates being superimposed so that the sheets of textile material are in adjacent, abutting relationship,
said laminates being joined along that portion of the laminates that lie in a path that follows the contour of the article of clothing,
said joining being achieved by the presence of said adhesive throughout the area of the textile materials of each laminate adjacent the contour path and by interconnection of the adhesive from each laminate at the abutting surface of the textile material.

## BRIEF DESCRIPTION OF THE DRAWINGS

Figure 1 shows a glove insert looking down from the top where the heavy line represents the contour path.

Figure 2a shows a cross-section of the insert in a "separated" form before the two laminates are bonded together along the contouring path.

Figure 2b shows a cross-section of the insert after bonding has taken place along the contour path.

Figures 3a and 3b depict schematically the preparation of laminates used in the invention.

Figure 4 depicts a top view of a typical sealing die used to bond two laminates to form the contoured seam on the insert.

Figure 5 depicts the die in position to bond the adjacent layers of laminated material.

## DETAILED DESCRIPTION OF THE INVENTION

The waterproof breathable porous polymeric membrane is preferably an expanded porous PTFE membrane, such as is described in U.S. patents 3,953,566 and 4,187,390, or a microporous polyolefin or the like. Preferably the membrane will be expanded porous PTFE. For the inserts of the invention the membrane weight is preferably 10 gm. per square yard to 25 gm. per square yard. By "breathable" is meant that the material permits water vapor to be transferred through it, but is impermeable to liquid water (waterproof).

The textile material may be a woven, non-woven or knit or the like. It provides abrasion resistance to the porous membrane. It provides non-blockiness to the laminate, and aids in inserting the insert into a glove. It also provides dimensional stability to the insert. The preferred textile material is non-woven and has a weight of between 5.6 gm./square yard to 28 gm./square yard. The air flow capability or porosity through the textile material should be adequate enough for the adhesive to flow easily through it. The preferred textile material should also be thin so that the thickness of this substrate is totally encapsulated by the adhesive. Preferred thickness is less than 10 mils, more preferred is less than 5 mils. The preferred textile materials are made of polyester, nylon, and the like.

The breathable, thermoplastic, remeltable adhesive has several functions. It adheres the textile fabric to the porous membrane and is used to adhere the two laminates together at the contour seam by flowing it through the open spaces (pores) in the textile fabric. It also acts as a protective layer for the porous membrane when applied as a continuous coating. Preferably it will have a weight of between 10 and 40 gm. per square yard. The adhesive can be a polyester adhesive or a polyurethane adhesive. Preferably the adhesive will be the reaction product of

(i) a polyol (A) having a number average molecular weight of from about 600 to about 3500 and having a functionality of at least 2;

(ii) an isocyanate (B) having a functionality of at least 2; and

(iii) a low molecular weight chain extender (C) having a molecular weight in a range lower than about 500 and having a functionality of at least 2,

wherein the reactants are employed in such proportions so as to satisfy the following equations:

$$\frac{EqNCO}{EqOH + EqCE} \geq 0.99$$

$$EqOH = EqCE$$

$$EqCE > 0,$$

wherein EqNCO is the molar equivalent of the isocyanate species employed, and EqOH and EqCE denote the respective molar equivalents of the polyol and chain extender employed, the soft segments being provided by the polyol of primarily oxyethylene units, and the suitable hard segments being provided by the reaction product of the isocyanate and chain extender.

Within this class, preferred is the reaction product of:

(i) a polyol (A) of primarily oxyethylene units, having a number average molecular weight of from about 600 to about 3500;

(ii) a polyisocyanate (B); and

(iii) a low molecular weight bifunctional chain extender (C) having a molecular weight in a range lower than about 500.

Within this class, more preferred is the reaction product of:

(i) a poly(alkylene ether) glycol (A) of primarily oxyethylene units, having a number average molecular weight of from about 600 to about 3500;

(ii) a diisocyanate (B); and

(iii) a low molecular weight bifunctional chain extender (C) having a molecular weight in a range lower than about 500.

The more preferred class of polyurethanes useful herein are the reaction product of:

(i) a poly(oxyalkylene) glycol (A) of primarily oxyethylene units, having a number average molecular weight of from about 600 to about 3500;

(ii) a polyisocyanate (B);

(iii) a low molecular weight bifunctional chain extender (C) having a molecular weight in a range lower than 500; and optionally

(iv) a chain terminator (D).

The most preferred adhesives are polyurethanes where A is a poly(oxyalkylene)glycol of molecular weight between about 1,000-2,000 and containing in excess of 70% oxyethylene units, B is a mixed isomer of dicyclohexylmethane- 4,4' - diisocyanate, and C is a glycol having a molecular weight less than 500, and D is a chain terminator which is reactive with any residual isocyanate moieties.

The adhesive is activated by thermal, high-frequency or ultrasonic energy, which causes the adhesive to melt. Pressure and the inherent liquid-proof nature of she membrane are both utilized to cause the melted adhesive to flow through the textile material and adhere to adhesive flowing through the textile material in the other laminate.

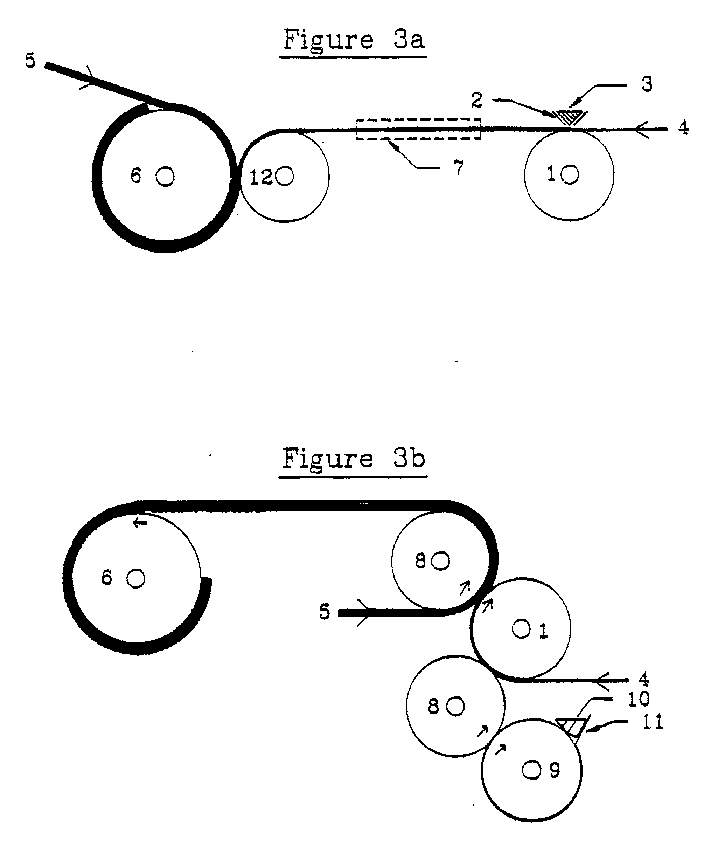

The adhesive can be applied to the membrane by a solvent technique or by hot melt techniques. In solvent form it can be conveniently applied to the membrane by spraying or use of an application trough or the like, as shown in Figure 3a. For hot melt application, extrusion or drum unloading delivery can be employed with a coating line as shown in Figure 3b where hot melt adhesive 10 is applied by doctor blade 11 to membrane 4 . Gravure roll 9 , roll 1 and silicone rubber roll aid in causing membrane 4 and textile material 5 to contact and laminate. The laminate is then wound on roll 6 .

Preferably the breathable adhesive will have a melting point between 40 and 200°C. It also preferably will have a low viscosity at or above the melt point to aid flow through the textile material.

To produce the inserts of the invention, the porous membrane is continuously coated on one side with the breathable remeltable adhesive and then the textile material applied to form a laminate. Two laminates are then placed together and then the adhesive is activated along the contour path, preferably using a sealing die. The type of activation will depend on the adhesive. Most commonly, the remeltable adhesive will be one that is heat activated. On activation around the contour, the adhesive in each laminate melts and flows inwardly through the textile material of each layer until the remeltable adhesive from each laminate meets and bonds with itself to form a solid strong bond.

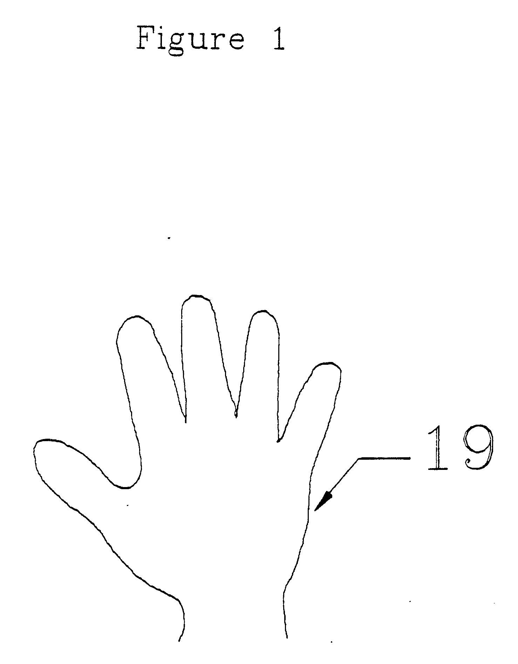

Referring now to Figure 1, a glove insert is depicted shown from the top. The contour line is shown by heavy line 19 .

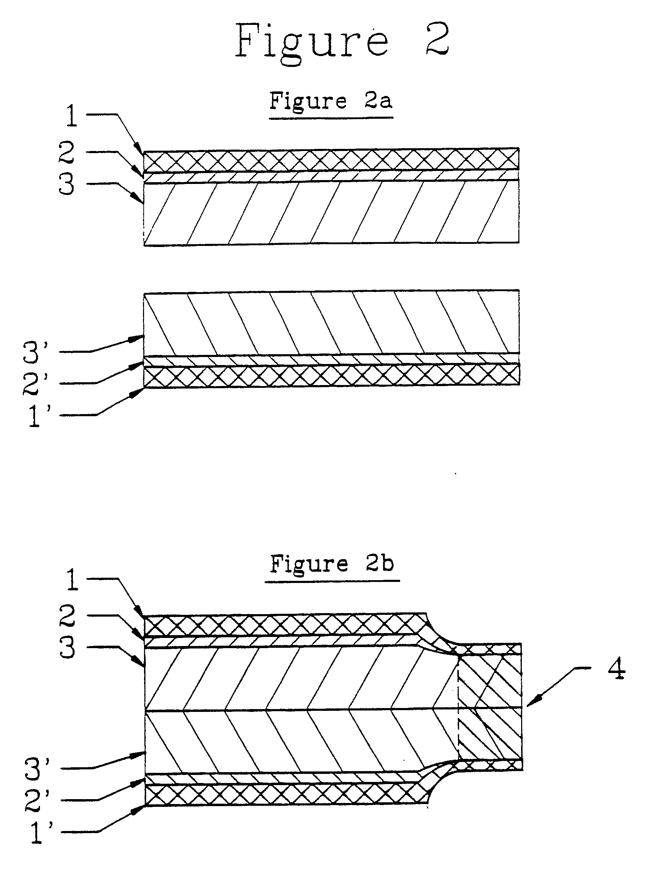

Figure 2a shows the insert of the invention in separated form before the two laminates are sealed along the contour path. The porous membranes are shown by 1 and 1¹, the breathable adhesive by 2 and 2¹, and the textile material by 3 and 3¹.

Figure 2b shows the same insert as in 2a, but after the heat activation step. Four 4 depicts those portions of the textile material through which the adhesive passes on melting, and has bonded to itself. The adhesive meets at the interface of the textile material of each laminate to form a strong bond.

An advantage of this invention is that the adhesive bonds to itself in a very thin coating without leaving an excessive residue at the interface on the surface of 3 and 3¹. This contrasts to applying adhesive in the form of a bead between the laminates which can leave a thick seam area of the point of seal. Also, by stamping and bonding the entire contour at the same time, the production speed is greatly enhanced.

## EXAMPLE 1

The adhesive was prepared as follows:

220.6 lbs. of methylene bis (4-cyclohexylisocyanate) was charged into a reactor at 55°C. Then 23.81 gm. of catalyst T-12 (from Air Products) was added to the reactor under nitrogen and allowed to mix for 10 minutes. Then 231.9 lbs of polyethylene glycol with molecular weight of 1377 was charged to the reactor. The reaction was allowed to complete as determined by %NCO titration (% NCO reached to 11.46). The reactor was cooled to 43°C and 71.2 lbs. of diethylene glycol was added to the reaction mixture and allowed to mix for 15 minutes and the reaction mass was dumped into 5 gallon pails. The mix was allowed to post-cure in an oven at 65°C for 3 days. The material was allowed to cool down to room temperature and chopped into 1 inch cubicals. This material was later solvated in a 50/50 blend of ethanol acetone to make a 33% solids solution. Then 0.5% dibutylamine was added to this solution at the end of solvation.

Referring to Figure 3(a), the laminate was prepared by using solvated adhesive 3 and coating it on expanded PTFE membrane 4 (about 14 gms./square yard weight) obtained from W L. Gore & Associates, Inc., using trough 2 over roll 1 . The gap between trough 2 and the PTFE membrane 4 was adjusted to about 2 mils. The trough was filled with the solvated adhesive 3 and the line is run at about 10 ft./min. The coated expanded PTFE was taken up on a tenter frame 7 and allowed to partially dry.

After the coated membrane has travelled about 15 ft, it has partially dried out, i.e., the coating material is not fluid. A 14 gm./sq. yd. weight thermally bonded polyester non-woven 5 (obtained from Veratec, Inc.) is layered on top of the coating and the non-woven and membrane 4 adhesively bond as they are passing through the nip between rolls 6 and 12 .

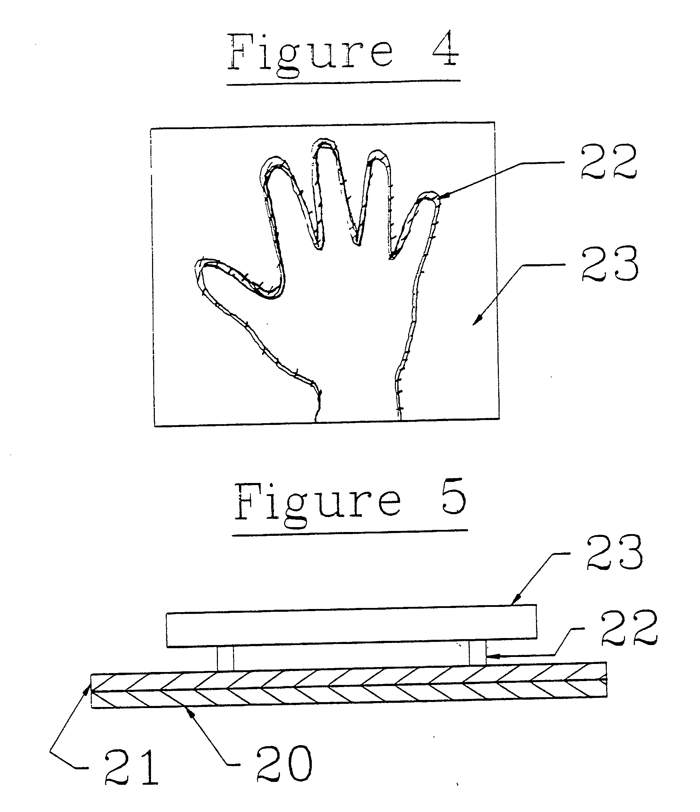

Two such laminated layers were put on top of each other with the non-woven fabric sides facing each other and using a heated die in the form of a glove, a glove was prepared by heating the die to 230° C and closing the press for 1 second. Figures 4 and 5 depict this step. Die 23 contains heating element 22, element 22 is constructed to fit the contour line of the glove. 23 represents that die base or support while 22 is the heated die element. The die is placed on the two laminates 20 and 21 . The die is heated effecting sealing of the two laminates along the contour path. Thus, a glove insert is obtained.

The glove insert so formed was found very easy to slide over a glove form. The glove was tested as follows: peel strength (at break) was 9.6 pounds, and the MVTR was 7377 gm./meter$^2$/24 hours.

Peel strength was determined by using a standard Instron tester using one inch wide specimens at 50% strain rate.

MVTR was determined as described in U.S. serial number 252,832 filed October 3, 1988, allowed April 6, 1989 in the name of P. M. Crosby using sodium chloride as the salt.

## Claims

1. A waterproof insert for lining the interior of contoured articles of clothing, which comprises
two superimposed layers, each of which is a laminate composed of a sheet of porous polymeric membrane that is breathable but waterproof laminated by an adhesive of breathable thermoplastic polymer to a sheet of a textile material,
said laminates being superimposed so that the sheets of textile material are in adjacent, abutting relationship,
said laminates being joined along that portion of the laminates that lie in a path that follows the contour of the article of clothing,
said joining being achieved by the presence of said adhesive throughout the area of the textile materials of each laminate adjacent the contour path and by interconnection of the adhesive from each laminate at the abutting surface of the textile material.
2. The insert of Claim 1 wherein the porous membrane is expanded polytetrafluoroethylene.
3. The insert of claim 1 or 2 wherein the textile material is a non-woven.
4. The insert of claim 1, 2 or 3 wherein the adhesive is a polyurethane.
5. Process for manufacturing a waterproof insert according to claim 1 comprising the following steps:
1) laminating a sheet of the porous polymeric membrane to a sheet of textile material by using a continuous coating of the breathable adhesive
2) placing two of said laminates together to form a layered structure with the sheets of textile material adjacent one another in abutting relationship,
3) bonding said laminates together along a contour path of by causing the breathable thermoplastic adhesive polymer to flow together through the textile material layers of each laminate.
6. Process of Claim 5 wherein the porous membrane is expanded polytetrafluoroethylene.
7. Process of claim 5 or 6 wherein the textile material is a non-woven.
8. Process of claim 5, 6 or 7 wherein the adhesive is polyurethane.
9. Process of claim 8 wherein the adhesive is caused to flow by applying heat to the layered laminates.

Figure 1

19

# Figure 2

## Figure 2a

## Figure 2b

## Figure 3a

## Figure 3b

# Figure 4

22

23

# Figure 5

23

22

21   20